# EUROPÄISCHE PATENTSCHRIFT

(11) **EP 3 121 136 B1**
(45) Veröffentlichungstag und Bekanntmachung des Hinweises auf die Patenterteilung: **30.01.2019**
(21) Anmeldenummer: 16178962.3
(22) Anmeldetag: 12.07.2016
(51) Int. Cl.: B65G 21/20, B65G 43/00, B65G 47/76

(54) **ELEKTRISCHE WEICHENEINRICHTUNG FÜR AUTOMATISCHE FÖRDERVORRICHTUNGEN**
ELECTRIC TURNOUT UNIT FOR AUTOMATIC CONVEYING APPARATUS
DISPOSITIF D'AIGUILLAGE ELECTRIQUE POUR DISPOSITIFS DE TRANSPORT AUTOMATIQUES

(30) Priorität: 16.07.2015 DE 102015111577
(43) Veröffentlichungstag der Anmeldung: 25.01.2017
(73) Patentinhaber: EWAB Engineering AB, 592 23 Vadstena (SE)
(72) Erfinder: Almberg, Patrik, 59151 Motala (SE); Lundin, Roland, 59242 Vadstena (SE); Axman, Anders, 59241 Vadstena (SE)
(74) Vertreter: AWA Sweden AB

(56) Entgegenhaltungen:
- WO-A1-2004/094279
- JP-A- H01 250 190
- US-A- 5 452 786
- US-A1- 2006 144 764
- US-A1- 2010 032 261
- US-B2- 7 265 512

## Beschreibung

### TECHNISCHES GEBIET DER ERFINDUNG

Die Erfindung betrifft eine Weicheneinrichtung zum Festlegen und Ändern des Förderwegs von Objektträgern, die von einem Fördermittel einer Fördervorrichtung mitbewegt werden.

Derartige Weicheneinrichtungen werden insbesondere in automatischen Fördervorrichtungen eingesetzt, die zum Fördern von auf Objektträgern aufliegenden Werkstücken zwischen Bearbeitungsstationen dienen. Die Fördervorrichtung weist dafür ein Fördermittel auf, welches insbesondere als kontinuierlich angetriebene Förderkette ausgebildet und in einer Profilschiene geführt ist. Die Objektträger werden von der Förderkette durch Reibung mitgefördert, ohne formschlüssig in diese einzugreifen. An der jeweiligen Bearbeitungsstation wird der Objektträger mittels einer in ihrer Anhaltestellung in den Förderweg ragenden Anhaltevorrichtung angehalten. Die Förderkette bewegt sich dabei weiter.

Um den Objektträger einer anderen Bearbeitungsstation zuzuführen, weisen derartige Fördervorrichtungen Abzweigungen auf, an denen jeweils eine Weicheneinrichtung angeordnet ist. Je nach Stellung der Weicheneinrichtung bleibt der Förderweg der Objektträger unverändert festgelegt oder wird geändert.

### STAND DER TECHNIK

Im Stand der Technik sind pneumatische Weicheneinrichtungen zum Festlegen und Ändern des Förderwegs von Objektträgern allgemein bekannt.

Eine elektrische Weicheneinrichtung zum festlegen und Ändern des Förderwegs von Objektträgern ist aus dem deutschen Gebrauchsmuster DE 20 2014 000 310 U1 bekannt.

### Aufgabe der Erfindung

Der Erfindung liegt die Aufgabe zugrunde, eine Weicheneinrichtung zum Festlegen und Ändern des Förderwegs von Objektträgern bereitzustellen, die ihre gewünschte Weichenendpositionen auch nach einer Betriebsunterbrechung in einfacher Weise verlässlich wieder erreicht.

### LÖSUNG

Die Aufgabe der Erfindung wird erfindungsgemäß mit den Merkmalen der unabhängigen Patentansprüche 1 und 13 gelöst.

Weitere bevorzugte Ausgestaltungen sind den abhängigen Patentansprüchen zu entnehmen.

### WEITERER STAND DER TECHNIK

Aus der US-amerikanischen Patentanmeldung US 2011/0220458 A1 ist eine Weicheneinrichtung eines Gepäcktransportbands bekannt. Die Weicheneinrichtung weist eine Aktivierungsplatte und dieser zugeordnete Sensoren auf. Bei ihrer Rotation im Uhrzeigersinn passiert die Aktivierungsplatte verschiedene Sensoren, die als Sensorpaare ausgebildet sind. Das erste Sensorpaar dient dazu, eine Reduzierung der Drehgeschwindigkeit der Aktivierungsplatte hervorzurufen. Das zweite Sensorpaar dient zum Hervorrufen des Anhaltens der Aktivierungsplatte und somit des Schwenkarms.

Aus dem Dokument US20060144764A1 ist eine elektrische Weicheneinrichtung nach dem Oberbegriff des Anspruchs 1 bekannt. US20060144764A1 betrifft eine Vorrichtung zum gerichteten Führen von Gegenständen mit unterschiedlicher Gestalt, die auf einem Förderband mithilfe eines beweglichen Gatters, das steuerbar ist.

### BESCHREIBUNG DER ERFINDUNG

Die Erfindung ist in der Ansprüche 1 und 13 definiert, es betrifft eine elektrische Weicheneinrichtung zum Festlegen und Ändern des Förderwegs von Objektträgern, die von einem Fördermittel einer Fördervorrichtung mitbewegt werden. Die elektrische Weicheneinrichtung weist ein drehbar gelagertes Schwenkwinkeldefinitionselement und einen oder mehrere Sensoren zum Feststellen einer ersten Schwenkstellung und einer zweiten Schwenkstellung des Schwenkwinkeldefinitionselements auf. Die erste Schwenkstellung und die zweite Schwenkstellung unterscheiden sich durch eine erste Schwenkwinkeldifferenz größer null voneinander.

Die neue Schwenkeinrichtung weist also keinen pneumatischen Antrieb, sondern einen elektrischen Antrieb auf. Dabei kann es sich insbesondere um einen Schrittmotor handeln. Ein solcher Schrittmotor ist besonders gut dafür geeignet, eine definierte Position anzufahren. Ein Schrittmotor ist weiterhin besonders leistungsstark, so dass mit ihm problemlos die erforderlichen Kräfte bzw. Momente aufgebracht werden können. Es ist aber ebenfalls möglich, einen anderen geeigneten elektrischen Motor einzusetzen.

Das neue Schwenkwinkeldefinitionselement wirkt in besonderer Weise mit dem einen oder den mehreren Sensoren zusammen, um letztendlich die gewünschten Weichenendstellungen der Weicheneinrichtung zu erreichen. Diese Weichenendstellungen entsprechen den durch die Weicheneinrichtung vorgegebenen unterschiedlichen Förderwegen. In vielen Fällen handelt es sich dabei um zwei unterschiedliche Förderwege. Es ist aber ebenfalls möglich, dass die Weicheneinrichtung drei oder mehr Förderwege festlegt oder es sich bei einem der Förderwege um eine Pufferposition oder eine andere Nichtförderstellung handelt.

Die Ausbildung und Anordnung des Schwenkwinkeldefinitionselements in Kombination mit der Anordnung des einen Sensors oder der mehreren Sensoren legt also die beiden Schwenkstellungen des Schwenkwinkeldefinitionselements und damit die zwischen diesen Schwenkstellungen vorhandene erste Schwenkwinkeldifferenz fest.

Die elektrische Weicheneinrichtung ist eine drehfest mit dem Schwenkwinkeldefinitionselement verbundene Welle mit einer einem ersten Förderweg der Objektträger zugeordneten dritten Schwenkstellung und einer einem zweiten Förderweg der Objektträger zugeordneten vierten Schwenkstellung aufweisen. Die dritte Schwenkstellung und die vierte Schwenkstellung unterscheiden sich durch eine zweite Schwenkwinkeldifferenz größer null. Die Welle ist - insbesondere über einen Flansch - mit einem Weichenarm drehfest verbunden. Der Weichenarm ist das Bauteil der Weicheneinrichtung, das in den Förderweg hineinragt und diesen für die Objektträger definiert. Die dritte Schwenkstellung und die vierte Schwenkstellung entsprechen also direkt den beiden Endpositionen der Weicheneinrichtung.

Die erste Schwenkstellung des Schwenkwinkeldefinitionselements kann der dritten Schwenkstellung der Welle und die zweite Schwenkstellung des Schwenkwinkeldefinitionselements der vierten Schwenkstellung der Welle zugeordnet sein. Diese Zuordnung kann - muss aber nicht - bedeuten, dass die Schwenkstellungen übereinstimmen. Die Schwenkstellungen können also auch voneinander abweichen. Dies Abweichung ist insbesondere so gewählt sein, dass die zweite Schwenkwinkeldifferenz größer als die erste Schwenkwinkeldifferenz ist.

Die zweite Schwenkwinkeldifferenz ist größer als die erste Schwenkwinkeldifferenz sein. Sie kann z. B. zwischen etwa 2° und 20°, insbesondere zwischen etwa 6° und 10°, größer sein. Die erste Schwenkwinkeldifferenz kann durch die Außengeometrie des Schwenkwinkeldefinitionselements bestimmt sein. Die Außengeometrie des durch den elektrischen Motor drehend angetriebenen Schwenkwinkeldefinitionselements führt dazu, dass ein Sensorsignal erzeugt wird. Dieses Sensorsignal gibt an, dass der jeweilige Endpunkt der Schwenkbewegung des Schwenkwinkeldefinitionselements erreicht wurde. In Abhängigkeit davon wird die Rotationsbewegung des elektrischen Motors gestoppt. Dieses Stoppen kann entweder unmittelbar oder auch mit einer bestimmten Verzögerung erfolgen. Beim Vorliegen der oberhalb beschriebenen größeren zweiten Schwenkwinkeldifferenz wird die Drehbewegung des Elektromotors und somit der Welle der elektrischen Weicheneinrichtung nach dem Erreichen des Endpunkts der Drehbewegung des Schwenkwinkeldefinitionselements noch fortgesetzt. Wenn es sich um einen Schrittmotor handelt, wird noch eine definierte Anzahl zusätzlicher Schritte ausgeführt.
Das Schwenkwinkeldefinitionselement weist einen der ersten Schwenkstellung zugeordneten ersten Detektionspunkt und einen der zweiten Schwenkstellung zugeordneten zweiten Detektionspunkt auf. Die Detektionspunkte werden durch den oder die Sensoren erfasst und dadurch das Erreichen der gewünschten Schwenkstellung festgestellt.
Der erste Detektionspunkt und der zweite Detektionspunkt können Endpunkte eines gemeinsamen Kreisbogenabschnitts sein. Der oder die Sensoren sind dann insbesondere so angeordnet, dass das im Bereich des Kreisbogenabschnitts vorhandene Material des Schwenkwinkeldefinitionselements im erfassten Bereich des oder der Sensoren liegt. Der Teil des Schwenkwinkeldefinitionselements außerhalb des Kreisbogenabschnitts ist außerhalb der Reichweite des oder der Sensoren angeordnet.

Die Länge des Kreisbogenabschnitts kann die Größe der ersten Schwenkwinkeldifferenz bestimmen. Unter der Länge ist dabei die Erstreckung des Schwenkwinkeldefinitionselements entlang des Kreisbogenabschnitts zu verstehen. Je nach Anordnung des oder der Sensoren und der Ausbildung und Anordnung des Kreisbogenabschnitts führt eine Vergrößerung der Länge des Kreisbogenabschnitts entweder zu einer entsprechenden Vergrößerung oder einer entsprechenden Verkleinerung der ersten Schwenkwinkeldifferenz. Wenn der Kreisbogenabschnitt um beispielsweise 10° verkürzt wird, erhöht bzw. erniedrigt sich die erste Schwenkwinkeldifferenz ebenfalls um 10°.

Die elektrische Weicheneinrichtung kann genau einen Sensor aufweisen, der beide Detektionspunkte detektiert. Die Ausbildung kann dabei insbesondere so gewählt sein, dass beide Detektionspunkte Endpunkte eines gemeinsamen Kreisbogenabschnitts mit einem im Vergleich zum restlichen Schwenkwinkeldefinitionselement vergrößerten Radius ausgebildet sind. Der zwischen den Detektionspunkten gebildete Detektionsbereich ist also als ein hervorstehender Bereich des Schwenkwinkeldefinitionselements ausgebildet. Beim Erreichen eines der Detektionspunkte wird ein entsprechendes Sensorsignal erzeugt. Wenn anschließend die andere Stellung des Schwenkwinkeldefinitionselements angefahren werden soll, muss die Drehrichtung des Schrittmotors umgekehrt werden. Hierfür wird insbesondere die zuletzt verwendete Drehrichtung in der Steuerungssoftware bzw. einem geeigneten Speicher der elektrischen Weicheneinrichtung oder eines anderen Bauteils abgespeichert.

Die elektrische Weicheneinrichtung kann aber auch stattdessen genau zwei Sensoren aufweisen. Der erste Sensor ist dann dem ersten Detektionspunkt und der zweite Sensor dem zweiten Detektionspunkt zugeordnet. Hierdurch entfällt die Notwendigkeit des Abspeicherns der zuletzt verwendeten Drehrichtung des Schrittmotors. Anhand der Tatsache, welcher der Sensoren ein Signal abgibt, ergibt sich zwangsläufig die letzte Drehrichtung des Schrittmotors.

Der oder die Sensoren können als Lichtschranken, photoelektrische Sensoren, induktive Sensoren oder andere geeigneten Sensoren ausgebildet sein. Mit derartigen Sensoren lässt sich exakt das Erreichen der jeweiligen Schwenkstellung des Schwenkwinkeldefinitionselements feststellen.

Der oder die Sensoren können als Sensoren mit einem Öffnerkontakt ausgebildet sein. Dies bedeutet, dass im nicht betätigten Zustand des Sensors das Sensorsignal ansteht, d. h. der Kontakt geschlossen ist. Beim Detektieren entfällt das Sensorsignal, d. h. der Kontakt ist geöffnet. Wenn der Sensor beispielsweise als Lichtschranke ausgebildet ist, ragt im nicht betätigten Zustand kein Element in den Lichtstrahl hinein. Der Lichtstrahl wird also nicht unterbrochen und das Sensorsignal steht an. Am Ende der Rotationsbewegung des Schwenkwinkeldefinitionselements tritt dann der jeweilige Detektionspunkt in den Bereich des Lichtstrahls ein und unterbricht diesen. Das entsprechende Sensorsignal steht nicht mehr an.

Es kann aber auch im nicht betätigten Zustand des Sensors ein Element in den Lichtstrahl hineinragen. Der Lichtstrahl wird also unterbrochen und das Sensorsignal steht an. Am Ende der Rotationsbewegung des Schwenkwinkeldefinitionselements tritt dann der jeweilige Detektionspunkt aus dem Bereich des Lichtstrahls heraus. Das entsprechende Sensorsignal steht nicht mehr an.

Der oder die Sensoren können aber auch als Sensoren mit einem Schließkontakt ausgebildet sein. Hier liegt im Vergleich zu einem Öffnerkontakt die umgekehrte Signalkonstellation vor. Wenn der Sensor auch hier beispielsweise als Lichtschranke ausgebildet ist, ragt im nicht betätigten Zustand ebenfalls kein Element in den Lichtstrahl hinein. Der Lichtstrahl wird also nicht unterbrochen, das Sensorsignal steht hierbei aber nicht an. Am Ende der Rotationsbewegung des Schwenkwinkeldefinitionselements tritt dann der jeweilige Detektionspunkt in den Bereich des Lichtstrahls ein und unterbricht diesen. Das entsprechende Sensorsignal steht jetzt an.

Es kann aber auch hier im nicht betätigten Zustand des Sensors ein Element in den Lichtstrahl hineinragen. Der Lichtstrahl wird also unterbrochen, aber das Sensorsignal steht nicht an. Am Ende der Rotationsbewegung des Schwenkwinkeldefinitionselements tritt dann der jeweilige Detektionspunkt aus dem Bereich des Lichtstrahls heraus. Das entsprechende Sensorsignal steht an.

Für die Einrichtung der Weicheneinrichtung für eine andere erste Schwenkwinkeldifferenz kann das Schwenkwinkeldefinitionselement gegen ein anderes Schwenkwinkeldefinitionselement mit einer anderen Außengeometrie austauschbar sein. Diese andere Außengeometrie legt dann also eine Schwenkwinkeldifferenz mit einer anderen Größe und/oder mit anderen Endpunkten der Schwenkbewegung fest. In dieser Weise ist es durch den Austausch eines sehr einfachen Bauteils der elektrischen Weicheneinrichtung - nämlich des Schwenkwinkeldefinitionselements - möglich, die Weicheneinrichtung für eine andere Einbausituation ein- bzw. umzurüsten. Beispiele für verschiedene Schwenkwinkeldifferenzen sind 19°, 27° und 35°.

Es ist ebenfalls möglich, für die Einrichtung der Weicheneinrichtung für eine andere erste Schwenkwinkeldifferenz die Position der Sensoren in der Weicheneinrichtung relativ zu dem Schwenkwinkeldefinitionselement einstellbar auszubilden. Durch eine Verschiebung der Sensoren ergeben sich andere Endpunkte der Schwenkbewegung des Schwenkwinkeldefinitionselements und ggf. eine andere erste Schwenkwinkeldifferenz. In dieser Weise ist es ohne ein Bauteil auszutauschen möglich, die Weicheneinrichtung für eine andere Einbausituation ein- bzw. umzurüsten.

Die elektrische Weicheneinrichtung kann ein Gehäuse aufweisen. Das Gehäuse schützt die im Gehäuse angeordneten mechanischen und elektrischen Komponenten der Weicheneinrichtung sicher vor Verschmutzungen. Das Gehäuse kann insbesondere die Anforderungen der Schutzart IP54 erfüllen. Hierdurch ist sichergestellt, dass die Weicheneinrichtung bei üblichen Betriebsbedingungen fehlerfrei arbeitet.

Die Sensoren sind also in dem Gehäuse der elektrischen Weicheneinrichtung angeordnet und nicht im Bereich der Weichenarme der Weicheneinrichtung. Die Sensoren detektieren nicht die sich letztendlich ergebende und ergebnisentscheidende Position der Weichenarme, sondern eines inneren Bauteils der Weicheneinrichtung - nämlich des Schwenkwinkeldefinitionselements.

Die Weicheneinrichtung aufweist eine separate Regeleinrichtung. Die Regeleinrichtung kann mit einer speicherprogrammierbaren Steuerung (SPS) zum Senden und Empfangen von elektrischen Signalen verbindbar sein.

Das Schwenkwinkeldefinitionselement kann insbesondere als plattenförmiges Element ausgebildet sein, welches auf einem anderen Bauteil der elektrischen Weicheneinrichtung montiert wird. Bei diesem anderen Bauteil kann es sich beispielsweise um ein Teil des Getriebes der elektrischen Weicheneinrichtung handeln.

Das plattenförmige Schwenkwinkeldefinitionselement ist insbesondere in seinen funktionsbestimmenden Bereichen rotationssymmetrisch ausgebildet. Diese funktionsbestimmenden Bereiche sind die Detektionsbereiche, die mittels des oder der Sensoren erfasst werden. Nicht funktionsbestimmende Bereiche des Schwenkwinkeldefinitionselements können ebenfalls rotationssymmetrisch ausgebildet sein. Sie können aber auch für eine Materialersparnis oder zum Schaffen von Bauraum nicht rotationssymmetrisch ausgebildet sein.

Die elektrische Weicheneinrichtung kann einen elektrischen Schrittmotor zum Erzeugen der Schwenkbewegung der Welle und des Schwenkwinkeldefinitionselements aufweisen. Der elektrische Antrieb kann mit einem Getriebe verbunden sein, dass ebenfalls Teil der elektrischen Weicheneinrichtung ist. Der Schrittmotor wird in Abhängigkeit von den Sensorsignalen des oder der Sensoren ausgeschaltet. Der Schrittmotor ist insbesondere ebenfalls in dem Gehäuse der elektrischen Weicheneinrichtung angeordnet. Die Ausgangswelle des Schrittmotors ist insbesondere über das Getriebe mit der Welle der elektrischen Weicheneinrichtung verbunden. Das Schwenkwinkeldefinitionselement ist insbesondere an einem Teil des Getriebes der elektrischen Weicheneinrichtung befestigt.

Die Erfindung betrifft weiterhin ein Verfahren zum Anlernen einer elektrischen Weicheneinrichtung, insbesondere einer Weicheneinrichtung mit einem Teil oder allen der vorangehend beschriebenen Merkmale. Das Verfahren weist die folgenden Schritte auf:
- Verschwenken eines Weichenarms der Weicheneinrichtung mittels eines elektrischen Antriebs in Richtung einer gewünschten Weichenendstellung,
- Detektieren des Erreichens einer definierten Schwenkstellung eines Schwenkwinkeldefinitionselements der Weicheneinrichtung mittels eines Sensors unter Abgabe eines Signals an eine Regeleinrichtung,
- fortgesetztes Verschwenken des Weichenarms in Richtung der gewünschten Weichenendstellung für eine definierte Zeit oder einen definierten Weg,
- Verschwenken des Weichenarms in die entgegengesetzte Richtung, bis die vorherige Schwenkstellung des Schwenkwinkeldefinitionselements wieder erreicht wurde, wobei währenddessen der dabei zurückgelegte Weg ermittelt und als Kalibrierungsweg abgespeichert wird.

Im nächsten Schritt erfolgt dann insbesondere ein erneutes Verschwenken des Weichenarms in Richtung der gewünschten Weichenendstellung um den ermittelten Kalibrierungsweg, so dass die gewünschte Weichenendstellung erreicht wird. Dieser Schritt gehört aber funktional eher nicht mehr zu Anlernverfahren, sondern zum Produktivbetrieb.

Weitere Verfahrensschritte und zusätzliche Details sind in der Figurenbeschreibung angegeben. Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht einer beispielhaften Ausführungsform der neuen elektrischen Weicheneinrichtung.
- **Fig. 2**: zeigt eine Ansicht von oben auf die Weicheneinrichtung gemäß Fig. 1.
- **Fig. 3**: zeigt eine Schnittansicht der elektrischen Weicheneinrichtung gemäß der Linie Fig. 3 - Fig. 3 in Fig. 2.
- **Fig. 4**: zeigt eine Schnittansicht der elektrischen Weicheneinrichtung gemäß der Linie Fig. 4 - Fig. 4 in Fig. 2.
- **Fig. 5**: zeigt die Weicheneinrichtung in einer Explosionsdarstellung.
- **Fig. 6**: zeigt eine perspektivische Ansicht der Weicheneinrichtung mit einer angeschlossenen separaten Regeleinrichtung.
- **Fig. 7**: zeigt eine Ansicht von oben einer Profilschiene einer Fördervorrichtung mit der eingebauten Weicheneinrichtung.
- **Fig. 8**: zeigt eine rückseitige perspektivische Ansicht der Profilschiene gemäß Fig. 7.
- **Fig. 9**: zeigt eine Ansicht einer beispielhaften Ausführungsform des neuen Schwenkwinkeldefinitionselements und des Weichenarms der Weicheneinrichtung in der Nullstellung.
- **Fig. 10**: zeigt die Elemente der Weicheneinrichtung gemäß Fig. 9 in der Nullstellung sowie der ersten und zweiten Schwenkstellung des Schwenkwinkeldefinitionselements.
- **Fig. 11**: zeigt die Elemente der Weicheneinrichtung gemäß Fig. 9 in der Nullstellung sowie der dritten und vierten Schwenkstellung des Weichenarms der Weicheneinrichtung.
- **Fig. 12**: zeigt eine Ansicht einer beispielhaften Ausführungsform des neuen Schwenkwinkeldefinitionselements mit zwei um 180° versetzt angeordneten Sensoren.
- **Fig. 13**: zeigt eine Ansicht einer weiteren beispielhaften Ausführungsform des neuen Schwenkwinkeldefinitionselements mit zwei um 45° versetzt angeordneten Sensoren.
- **Fig. 14**: zeigt eine Ansicht einer weiteren beispielhaften Ausführungsform des neuen Schwenkwinkeldefinitionselements mit zwei um 45° versetzt angeordneten Sensoren.
- **Fig. 15**: zeigt eine Ansicht einer weiteren beispielhaften Ausführungsform des neuen Schwenkwinkeldefinitionselements mit nur einem Sensor.

### FIGURENBESCHREIBUNG

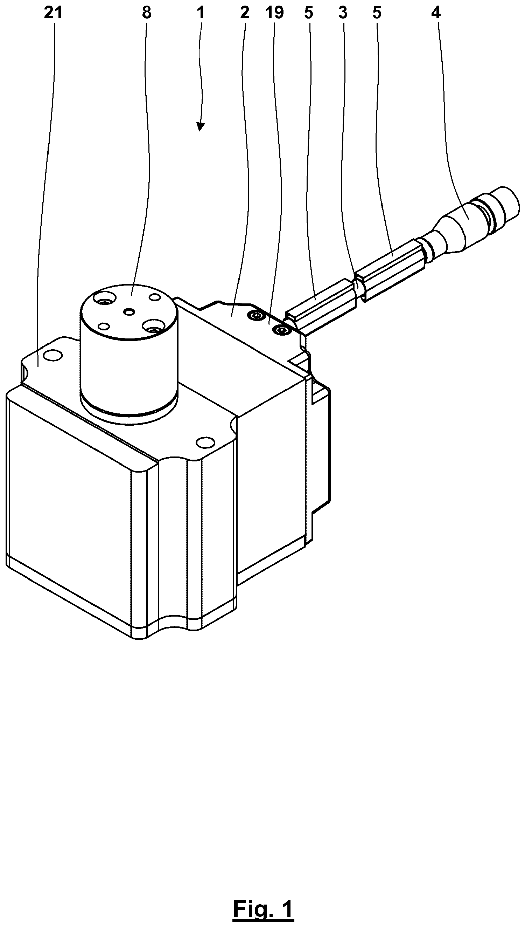

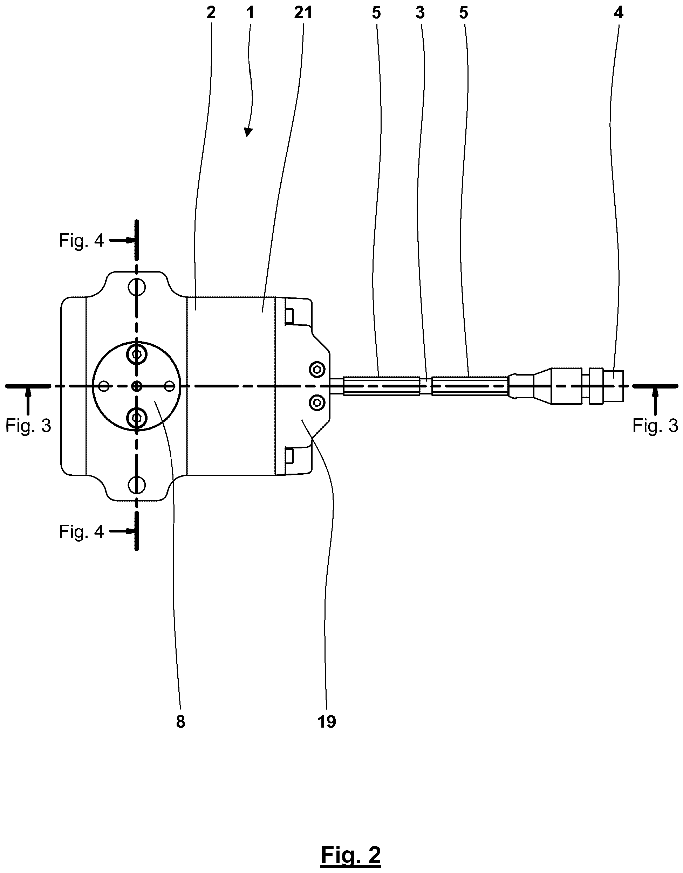

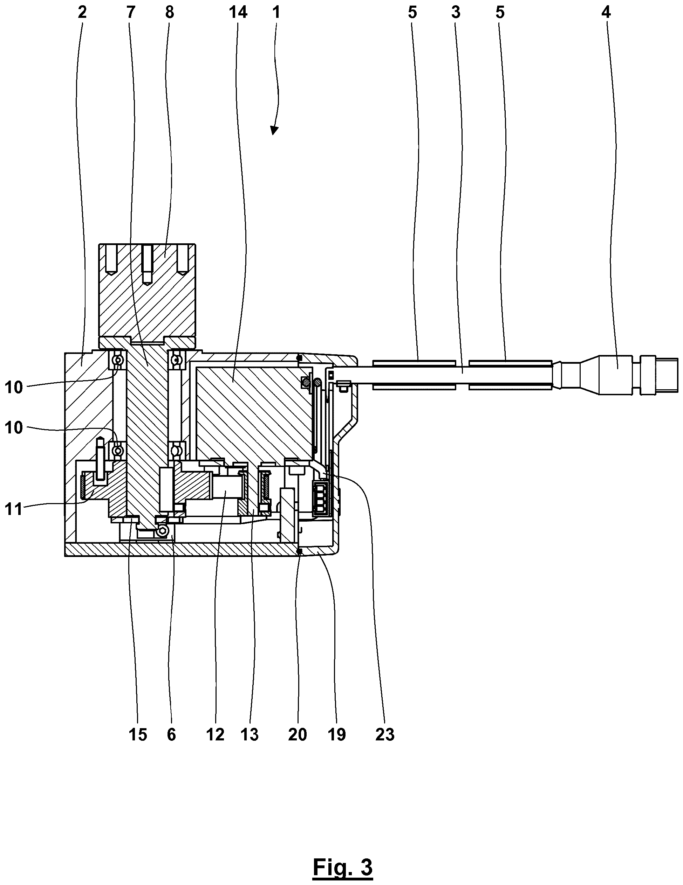

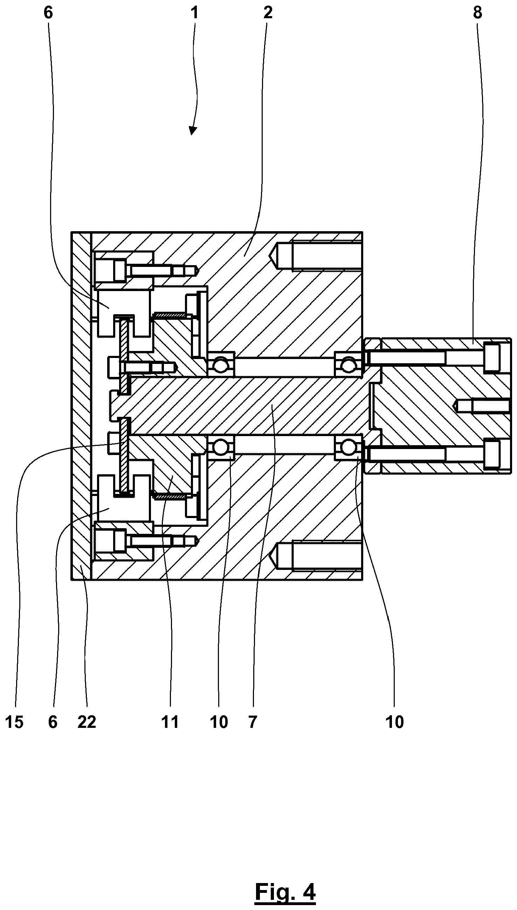

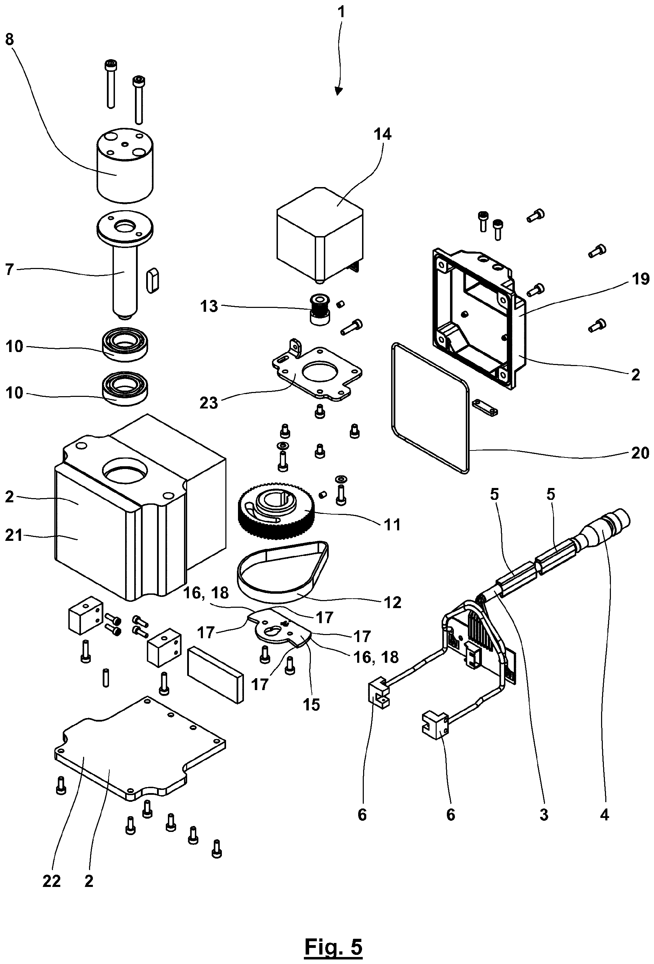

Die **Fig. 1-5** zeigen verschiedene Ansichten eines Ausführungsbeispiels einer neuen elektrischen Weicheneinrichtung 1. Die Weicheneinrichtung 1 dient zum Festlegen und Verändern des Förderwegs von Objektträgern, die von einem Fördermittel einer Fördervorrichtung mitbewegt werden.

Die elektrische Weicheinrichtung 1 weist ein Gehäuse 2 auf, in dem zumindest ein Teil der Komponenten der Weicheneinrichtung 1 angeordnet ist.

Aus dem Gehäuse 2 ist eine elektrische Leitung 3 geführt, an deren Ende ein Verbindungsstecker 4 angeordnet ist. An der elektrischen Leitung 3 sind hier vor dem Verbindungsstecker 4 noch zwei Etikettenhalter 5 angeordnet. Die Etikettenhalter 5 dienen insbesondere einer Beschriftung der Weicheneinrichtung 1 zum Anzeigen ihrer Besonderheiten.

Die elektrische Leitung 3 weist eine Reihe unterschiedlicher Kabel mit unterschiedlichen Funktionen auf. An die elektrische Leitung 3 sind u. a. die Sensoren 6 angeschlossen. Im vorliegenden Fall handelt es sich bei den Sensoren 6 um Lichtschranken. Es könnte sich aber auch um andere geeignete Sensoren 6 handeln.

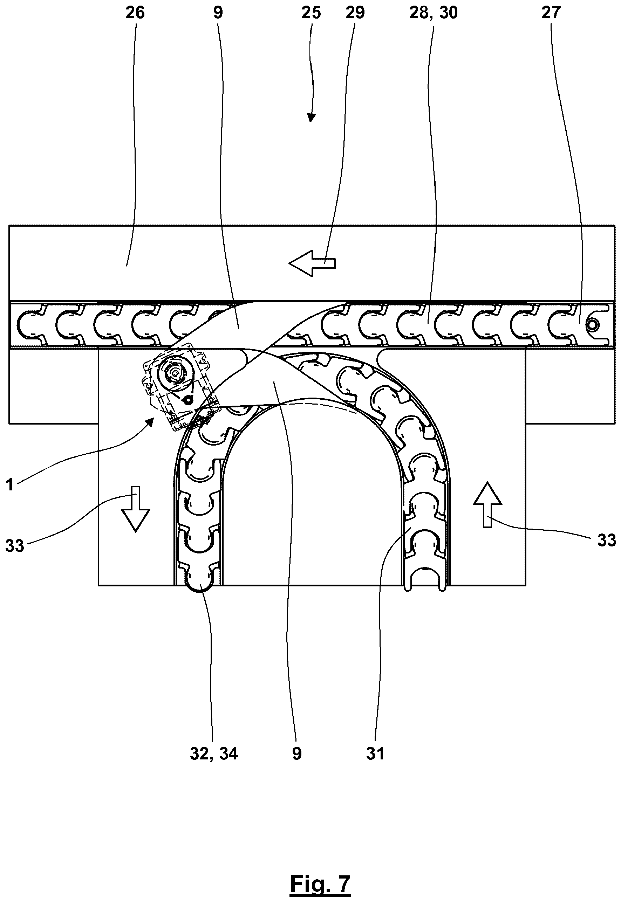

Aus dem Gehäuse 2 herausgeführt ist weiterhin eine Welle 7, an der außerhalb des Gehäuses 2 ein Flansch 8 befestigt ist. An dem Flansch 8 wird der in den Fig. 1-5 nicht dargestellte Weichenarm 9 (siehe Fig. 7) befestigt. Der Weichenarm 9 ist das Element der Weicheneinrichtung 1, welches den gewünschten Einfluss auf den Förderweg der zu fördernden Objekte erbringt. Die Welle 7 ist mittels Lagern 10 drehbar in dem Gehäuse 2 gelagert.

Im Bereich des anderen Endes der Welle 7 ist an dieser ein Zahnrad 11 drehfest fixiert. Auf dem Zahnrad 11 ist ein Zahnriemen 12 montiert, der das Zahnrad 11 mit einer verzahnten Ausgangswelle 13 eines Elektromotors 14 verbindet. Der Elektromotor 14 ist hier als Schrittmotor ausgebildet. Es könnte sich aber auch um einen anderen geeigneten Elektromotor handeln. In dieser Weise wird ein Getriebe gebildet, welches zur Übertragung einer Drehbewegung der Ausgangswelle 13 des Elektromotors 14 über den Zahnriemen 12, das Zahnrad 11, die Welle 7 und den Flansch 8 auf den Weichenarm 9 dient.

Der Elektromotor 14 ist dabei ebenfalls an die elektrische Leitung 3 angeschlossen und erhält über diese sowohl seine Stromversorgung als auch seine Funktionsbefehle.

Das Gehäuse 2 weist u. a. einen Gehäusedeckel 19 auf, der mittels Schraubverbindungen und einer Dichtung 20 mit dem Gehäusegrundkörper 21 verbunden ist. Das Gehäuse 2 weist weiterhin eine Gehäuseplatte 22 auf. Der Elektromotor 14 ist mittels einer Befestigungsplatte 23 in dem Gehäuse 2 befestigt.

Im Bereich des Endes der Welle 7 in dem Gehäuse 2 ist ein Schwenkwinkeldefinitionselement 15 angeordnet. Dieses ist drehfest mit der Welle 7 verbunden. Das Schwenkwinkeldefinitionselement 15 ist als ein plattenförmiges Element ausgebildet und weist mehrere Befestigungsöffnungen auf.

Die Außengeometrie des Schwenkwinkeldefinitionselements 15 bestimmt dessen Wirkungsweise. Im vorliegenden Beispiel weist das Schwenkwinkeldefinitionselement 15 zwei außenliegende Kreisbogenabschnitte 16 auf. Durch die jeweiligen Enden der Kreisbogenabschnitte 16 werden Detektionspunkte 17 und Detektionsbereiche 18 gebildet. Je nach der Stellung der Welle 7 und somit des jeweiligen Detektionsbereichs 18 des Schwenkwinkeldefinitionselements 15 ragt dieser Detektionsbereich 18 so in den Erfassungsbereich der Sensoren 6 ein, dass ein Sensorsignal erzeugt wird. Bei den als Lichtschranke ausgebildeten Sensoren 6 bedeutet dies, dass der Lichtstrahl unterbrochen wird. In dieser Weise wird also die Stellung des Schwenkwinkeldefinitionselements 15 und somit indirekt des Weichenarms 9 mittels der Sensoren 6 detektiert. Wozu diese Detektion dient und wie sie konfiguriert ist, wird unterhalb weiter beschrieben.

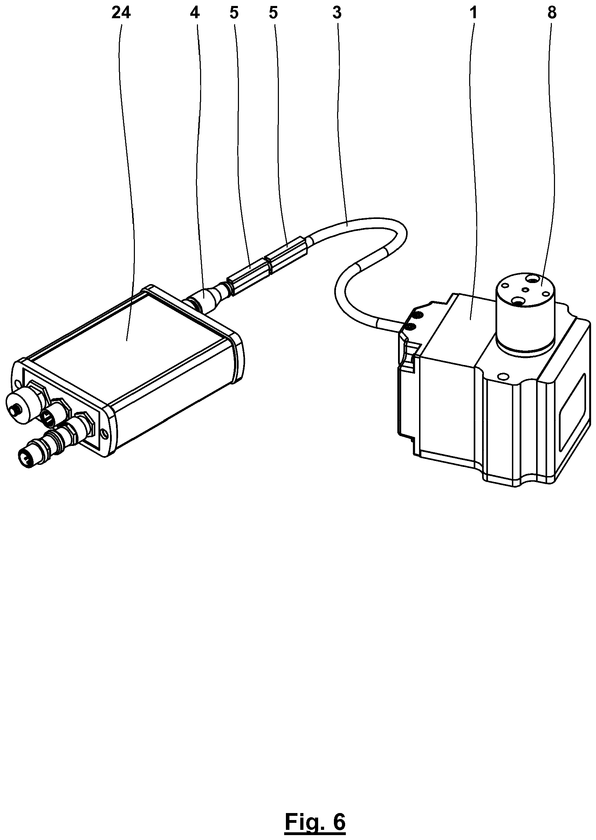

In **Fig. 6** ist eine weitere perspektivische Ansicht der Weicheneinrichtung 1 dargestellt. In diesem Fall ist eine separate Regeleinrichtung 24 über den Stecker 4 und die elektrische Leitung 3 mit der Weicheneinrichtung 1 verbunden.

Neben der mit dem Verbindungsstecker 4 verbundenen Verbindungsbuchse weist die Regeleinrichtung 24 weitere Anschlüsse auf, mittels derer sie mit einer speicherprogrammierbaren Steuerung (SPS; nicht dargestellt) verbindbar ist.

**Fig. 7** zeigt eine Ansicht der Weicheneinrichtung 1 in einem beispielhaften eingebauten Zustand. Die Weicheneinrichtung 1 ist in eine Fördervorrichtung 25 eingebaut. Da sich wesentliche Teile der Weicheneinrichtung 1 unterhalb der Fördervorrichtung 25 befinden, ist diese in gestrichelter Linienführung dargestellt.

Die Fördervorrichtung 25 weist eine Profilschiene 26 auf. Die Profilschiene 26 weist einen ersten Förderbereich 27 auf, in dem ein erstes Fördermittel 28 in der ersten Förderrichtung 29 angetrieben wird. Bei dem ersten Fördermittel 28 handelt es sich in diesem Beispiel um eine erste Förderkette 30. Es könnte sich aber auch um ein anderes geeignetes Fördermittel 28 handeln.

In der Profilschiene 26 ist ein zweiter Förderbereich 31 mit einem zweiten Fördermittel 32 angeordnet. Das zweite Fördermittel 32 wird in einer zweiten Förderrichtung 33 bewegt, die sich von der ersten Förderrichtung 29 unterscheidet. Das zweite Fördermittel 32 ist hier ebenfalls als Förderkette 34 ausgebildet. Es könnte sich aber auch um ein anderes geeignetes zweites Fördermittel 32 handeln.

Auf der ersten Förderkette 30 werden Objektträger (nicht dargestellt) abgelegt, auf denen zu bearbeitende Werkstücke befestigt sind. Die Objektträger liegen reibschlüssig auf der ersten Förderkette 30 auf und werden in der ersten Förderrichtung 29 von dieser mitgeführt.

Die Weicheneinrichtung 1 bestimmt nun, ob die Objektträger in dem ersten Förderbereich 27 verbleiben oder in den zweiten Förderbereich 31 überführt werden. In Fig. 7 sind beide Schwenkstellungen des Weichenarms 9 gleichzeitig dargestellt. Es versteht sich, dass immer nur eine dieser Stellungen gleichzeitig existiert. Wenn sich der Schwenkarm 9 hier in seiner etwa 3-Uhr-Stellung befindet, ragt der Weichenarm 9 nicht in den ersten Förderbereich 27 hinein. Die Objektträger verbleiben also im Bereich des ersten Förderbereichs 27 und werden an der Weicheneinrichtung 1 vorbeigeführt.

Wenn der Weichenarm 9 nun entgegen der Uhrzeigerrichtung verdreht wurde und sich in seiner etwa 1-2-Uhr-Stellung befindet, werden die von rechts ankommenden Objektträger in den zweiten Förderbereich 31 überführt und dort (in der Darstellung der Fig. 7 nach unten) in der Förderrichtung 33 weitertransportiert.

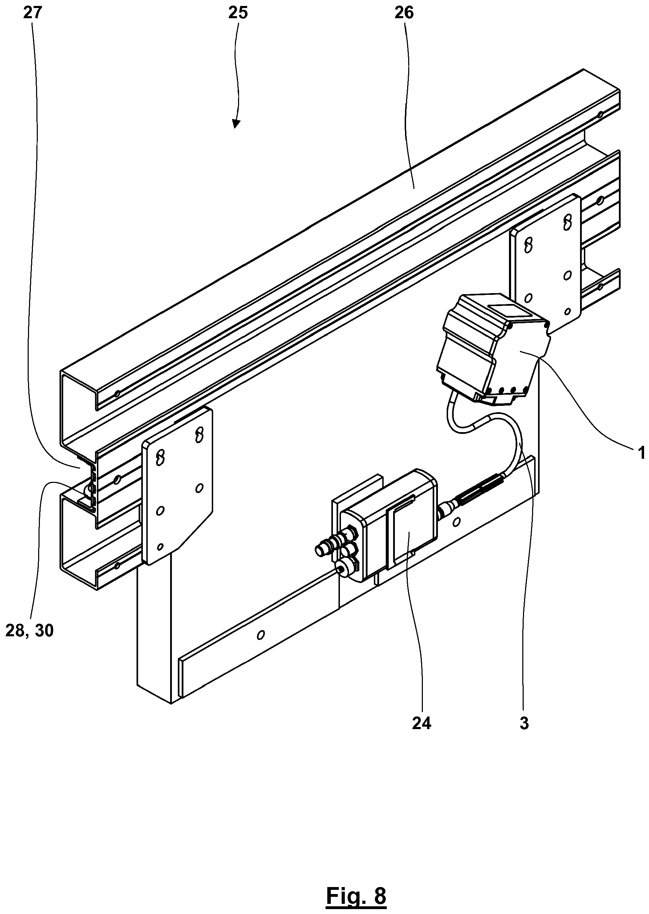

In **Fig. 8** ist die Rückseite der Fördervorrichtung 25 gezeigt, so dass die Anordnung der Weicheneinrichtung 1 und der damit verbundenen Regeleinrichtung 24 erkennbar ist. Es wird deutlich, dass wesentliche Teile des Gehäuses 2 und insbesondere der Gehäusegrundkörper 21 auf der anderen Seite der Profilschiene 26 als die Fördermittel 28, 32 angeordnet ist. Der Flansch 8 ragt durch eine Bohrung in der Profilschiene 26 hindurch, so dass an ihm der Weichenarm 9 befestigt werden kann und sich auf der anderen Seite der Profilschiene 26 befindet.

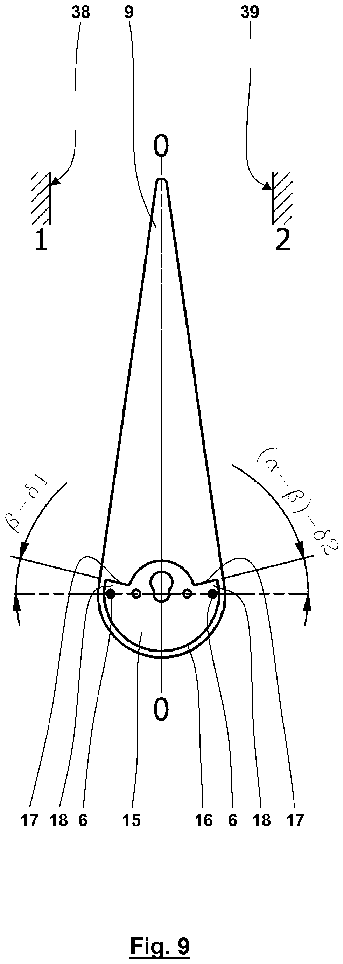

Die **Fig. 9-11** zeigen eine beispielhafte Anordnung einer beispielhaften Ausführungsform des Schwenkwinkeldefinitionselements 15, des Weichenarms 9 und der Sensoren 6 der neuen Weicheneinrichtung 1. Der Weichenarm 9 könnte auch eine andere Form besitzen, beispielsweise die in Fig. 7 dargestellte Form.

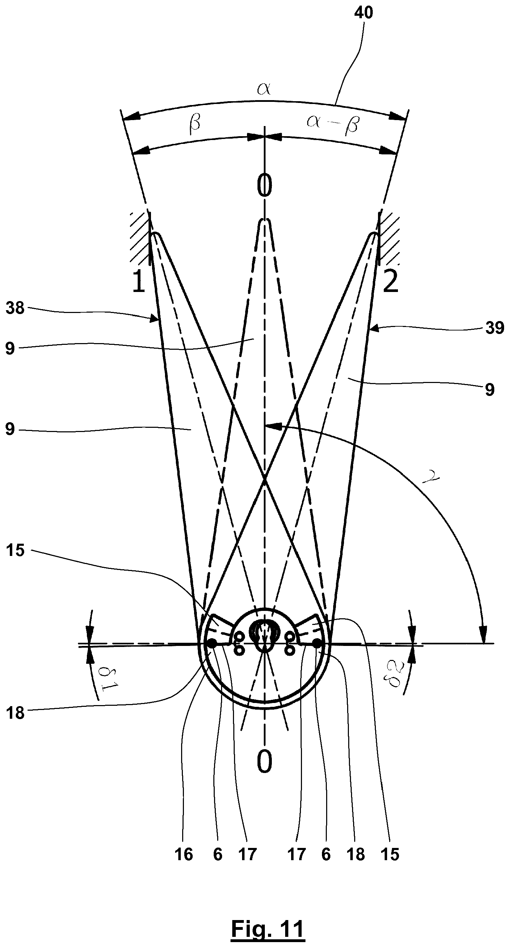

In **Fig. 9** ist das Schwenkwinkeldefinitionselement 15 und somit auch der drehfest mit diesem verbundene Weichenarm 9 in seiner 0-Stellung - d. h. der mittleren Stellung - dargestellt. Es existieren weiterhin seine Weichenendstellungen 1-Stellung und 2-Stellung, die durch die entsprechende seitliche Begrenzung des jeweiligen Förderbereichs 27, 31 der Profilschiene 26 definiert werden. Dementsprechend entsprechen die in **Fig. 11** dargestellte 1-Stellung und 2-Stellung der dritten Schwenkstellung 38 und der vierten Schwenkstellung 39 (oder umgekehrt) des Weichenarms 9.

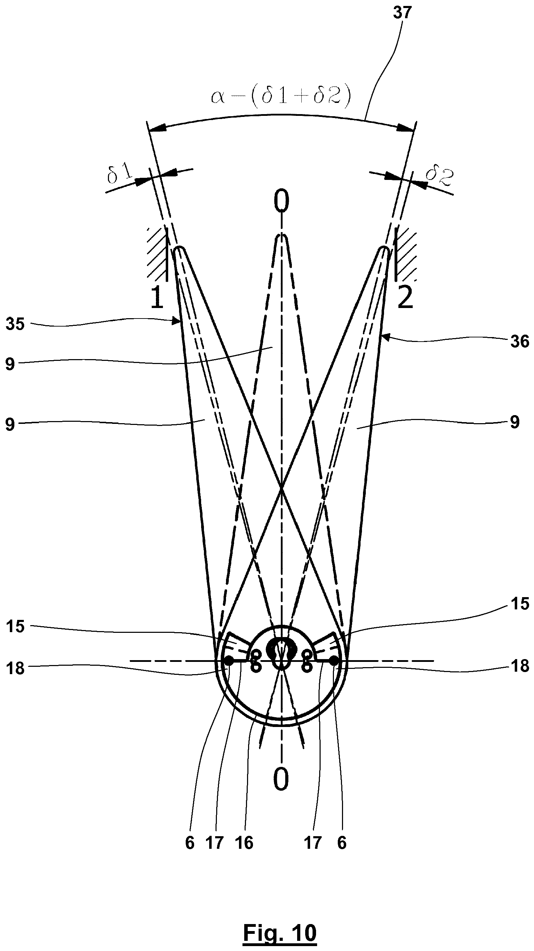

In den **Fig. 10** und **11** sind jeweils drei Stellungen des Schwenkwinkeldefinitionselements 15 und des Weichenarms 9 gleichzeitig dargestellt, die verständlicherweise nicht gleichzeitig eingenommen werden. Dadurch überlagern sich die Linien teilweise in diesen Zeichnungen.

In **Fig. 10** ist neben der 0-Stellung die erste Schwenkstellung 35 und die zweite Schwenkstellung 36 des Schwenkwinkeldefinitionselements 15 dargestellt. Es ist erkennbar, dass diese Schwenkstellungen 35, 36 nicht der 1-Stellung und 2-Stellung entsprechen, sondern sich davon durch den Winkel δ1 bzw. δ2 unterscheiden. Dies bedeutet, dass der Weichenarm 9 nicht die seitlichen Begrenzungen des jeweiligen Förderbereichs 27, 31 berührt.

Wenn sich das Schwenkwinkeldefinitionselement 15 und somit auch der Weichenarm 9 ausgehend von der 0-Stellung entgegen dem Uhrzeigersinn in Richtung der 1-Stellung verdreht, ragt der Detektionsbereich 18 des Schwenkwinkeldefinitionselements 15 zunächst weiterhin in den Erfassungsbereich beider Sensoren 6 hinein, so dass diese ein entsprechendes Detektionssignal abgeben. Wenn es sich bei den Sensoren 6 um Lichtschranken handelt, wird also der Lichtstrahl unterbrochen und das entsprechende Sensorsignal steht nicht an, d. h. der Kontakt ist geöffnet. Für die Beendigung dieser Schwenkbewegung ist in diesem Fall nun der linke der Sensoren 6 zuständig. Der im linken Bereich von Fig. 10 auf Höhe des linken Sensors 6 dargestellte Detektionspunkt 17 tritt aus dem Bereich des Sensors 6 heraus, so dass kein positives Detektionssignal mehr vorliegt. Wenn es sich bei den Sensoren 6 um Lichtschranken handelt, wird der Lichtstrahl also nicht mehr unterbrochen und das Sensorsignal steht an. Das entsprechende Signal wird über die elektrische Leitung 3 an die Regeleinrichtung 24 übertragen. Diese sendet daraufhin über die elektrische Leitung 3 ein Stopp-Signal an den Elektromotor 14. Entsprechendes gilt für die im rechten Bereich von Fig. 10 dargestellte zweite Schwenkstellung 36, bei der der im rechten Bereich der Figur eingezeichnete Detektionspunkt 17 aus dem Bereich des rechten Sensors 6 heraustritt.

Entsprechendes gilt auch für die in **Fig. 11** dargestellte dritte Schwenkstellung 38 und vierte Schwenkstellung 39 des Weichenarms 9. Im Unterschied zu Fig. 10 werden hier die 1-Stellung und die 2-Stellung eingenommen. Es liegt also die größere zweite Schwenkwinkeldifferenz 40 vor.

Diese verschiedenen Schwenkstellungen 35, 36 bzw. 38, 39 und die unterschiedlich großen Schwenkwinkeldifferenzen 37, 40 können für ein besonderes Selbstanlernverfahren der Weicheneinrichtung 1 genutzt werden. Dieses Anlernverfahren wird vorzugsweise immer nach einer Stromunterbrechung oder einem Neustart des Systems durchgeführt. Das Anlernverfahren kann die folgenden Phasen aufweisen:

### Phase 1

Der Weichenarm 9 wird in Richtung der gewünschten neuen Weichenendstellung 1-Stellung oder 2-Stellung verschwenkt. Wenn er sich zuvor in der normalen entsprechenden anderen Weichenendstellung befunden hat, erfolgt die Bewegung insbesondere mit einer verringerten Geschwindigkeit nach dem Start, wird dann beschleunigt und kurz vor Erreichen der Zielposition wieder verringert. Die Positionen, an denen die Geschwindigkeit erhöht bzw. verringert wird, können in Abhängigkeit von der Anzahl der erfolgten Schritte des Schrittmotors 14 und/oder des Erreichens der Detektionspunkte gewählt sein. Die Geschwindigkeiten, die Beschleunigung und die Verzögerung können in Abhängigkeit von dem Massenträgheitsmoment des Weichenarms 9 kalkuliert und über die Software der Regelungseinrichtung 24 berücksichtigt werden.

Wenn die Bewegung hingegen von einer undefinierten Zwischenposition beginnt, erfolgt sie mit einer verringerten Geschwindigkeit.

Sobald der entsprechende Detektionsbereich 18 bzw. der letzte Detektionspunkt 17 aus dem Bereich des jeweiligen Sensors 6 heraustritt, gibt dieser das entsprechende Signal an die Regeleinrichtung 24 ab. Es wurde also die in Fig. 10 dargestellte erste Schwenkstellung 35 bzw. zweite Schwenkstellung 36 eingenommen. Die Bewegung kann - muss aber nicht - unterbrochen werden.

### Phase 2

Die Bewegung wird nun mit einer geringen Geschwindigkeit für eine definierte Zeit bzw. einen definierten Weg fortgesetzt.

Dieser Weg ist so berechnet, das der Weichenarm 9 garantiert die 1-Stellung bzw. 2-Stellung erreicht. Beispielsweise kann dieser Weg zwischen etwa 5 und 10 mm, insbesondere zwischen etwa 7 bis 8 mm betragen.

### Phase 3

Die Drehrichtung des elektrischen Antriebs 14 wird nun umgekehrt, so dass der Weichenarm 9 wieder in der entgegengesetzten Richtung verschwenkt wird.

Dies erfolgt mit einer geringen Geschwindigkeit. Der zurückgelegte Weg wird dabei ermittelt. Bei einem Schrittmotor erfolgt dies anhand der Anzahl der Schritte.

Diese Rückwärtsbewegung erfolgt solange, bis der Detektionspunkt 17 des Schwenkwinkeldefinitionselements 15 wieder in den Bereich des Sensors 6 eintritt. An dieser Stelle wird die Wegbestimmung abgeschlossen. Der ermittelte Weg wird in einem Speicher der elektrischen Regeleinrichtung 24 Kalibrierungsweg abgespeichert.

### Phase 4

Der Weichenarm 9 wird nun mit einer geringen Geschwindigkeit in die gewünschte Richtung verschwenkt, bis er den Kalibrierungsweg zurückgelegt hat.

Ggf. kann er auch so programmiert sein, dass der Schrittmotor 14 einige wenige zusätzliche Schritte ausführt, um sicherzustellen, dass der Weichenarm 9 die gewünschte Endposition 1-Stellung bzw. 2-Stellung erreicht hat.

Sollte der Weichenarm 9 vor Beendigung dieses Kalibrierungsablaufs bereits den mechanischen Endanschlag erreichen, kann der Motor 14 eine definierte Anzahl an Versuchen unternehmen, um die angesteuerte Endposition zu erreichen, bevor die Regeleinrichtung 24 den Motor 14 stoppt und in einen Fehlermodus wechselt. Dieser Fehlermodus kann z.B. durch eine LED oder eine andere optische und/oder akustische Anzeigeeinrichtung an der Regeleinrichtung 24 angezeigt werden. In diesem Fall wird der mechanische Einbau des Weichenarms 9 in der Fördervorrichtung 25 überprüft.

Beide Endstellungen des Weichenarms 9 werden nach einer Stromunterbrechung beim ersten Anfahren der jeweiligen Richtung erneut angelernt. Die Richtung der Schwenkbewegung wird von der Regeleinrichtung 24 an den Schrittmotor 14 übergeben. Die Regeleinrichtung 24 wiederum erhält diesen Befehl z. B. von einer speicherprogrammierbaren Steuerung (SPS). Das Anlernen beider Endpositionen ist abgeschlossen, wenn beide Schwenkrichtungen über entsprechende Signale angesteuert wurden und der Kalibrierungsablauf wie zuvor beschrieben durchlaufen wurde. Es ist aber auch möglich, nur eine Endstellung anzulernen und die zweite Endstellung anhand der angelernten ersten Endstellung zu ermitteln.

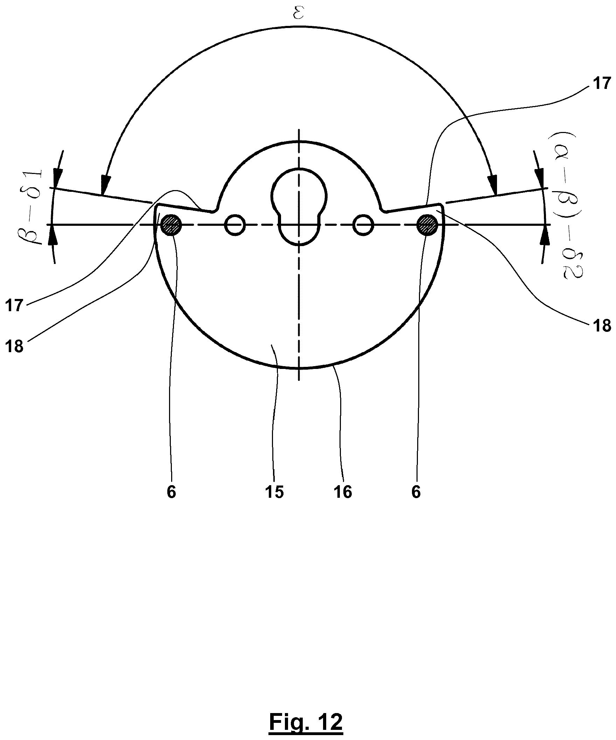

In den **Fig. 12-15** sind nun verschiedene beispielhafte Ausbildungen und Anordnungen des Schwenkwinkeldefinitionselements 15 und des oder der Sensoren 3 dargestellt.

Die in **Fig. 12** dargestellte Ausführungsform entspricht dabei der in den Fig. 9-11 gezeigten und oberhalb bereits ausführlich beschriebenen Ausführungsformen, so dass auf diese Ausführungen verwiesen wird.

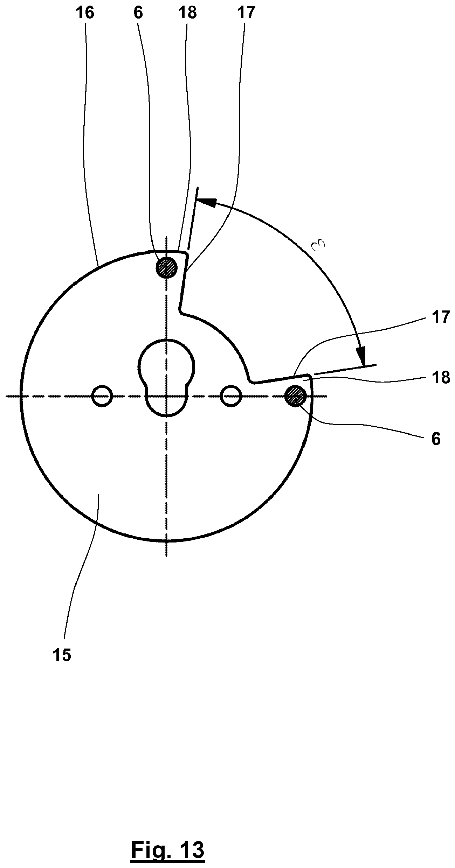

Bei der in **Fig. 13** dargestellten Ausführungsform sind im Gegensatz zu Fig. 12 die Sensoren 6 nicht um 180°, sondern um 90° versetzt angeordnet. Dementsprechend weist das Schwenkwinkeldefinitionselement 15 eine anderen Außengeometrie auf. Die dem jeweiligen Sensor 6 zugeordneten Detektionsbereiche 18 sind ebenfalls nur um etwa 90° zueinander versetzt angeordnet. Die Schwenkbewegung des Schwenkwinkeldefinitionselements 15 endet an dem jeweiligen Detektionspunkt 17. Dies bedeutet, dass die Schwenkstellungen und die Schwenkwinkeldifferenz durch eine Veränderung des Abstands der Detektionspunkte 17 voneinander (in der Rotationsrichtung) veränderbar ist. Die erste Schwenkwinkeldifferenz 37 kann in dieser Weise zur Anpassung der Weicheneinrichtung 1 an eine andere Profilschiene 26 durch den Austausch des Schwenkwinkeldefinitionselements 15 verändert werden. Die beiden Detektionsbereiche 18 liegen jeweils am Ende eines Kreisbogenabschnitts 16 mit einem gegenüber dem Nichtdetektionsbereich vergrößerten Radius. Dieser Kreisbogenabschnitt 16 erstreckt sich um mehr als 270°.

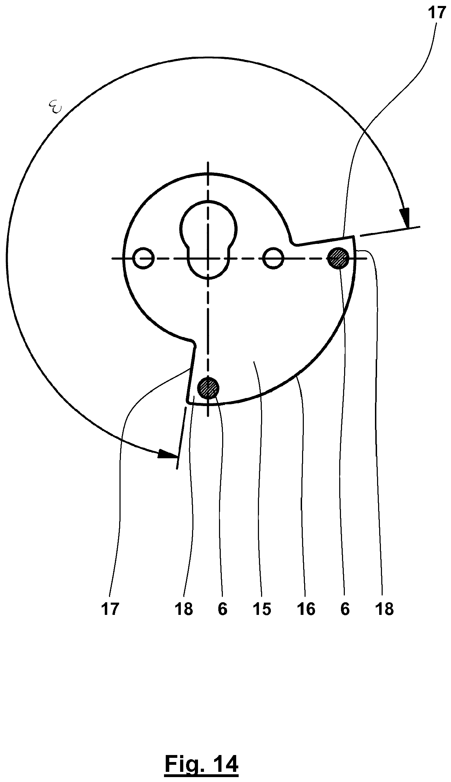

Bei der in **Fig. 14** dargestellten beispielhaften Ausführungsform sind die Sensoren 6 ebenfalls um 45° versetzt zueinander angeordnet. Die beiden Detektionsbereiche 18 liegen jeweils am Ende eines Kreisbogenabschnitts 16 mit einem gegenüber dem Nichtdetektionsbereich vergrößerten Radius. Dieser Kreisbogenabschnitt 16 erstreckt sich um etwas mehr als 90°.

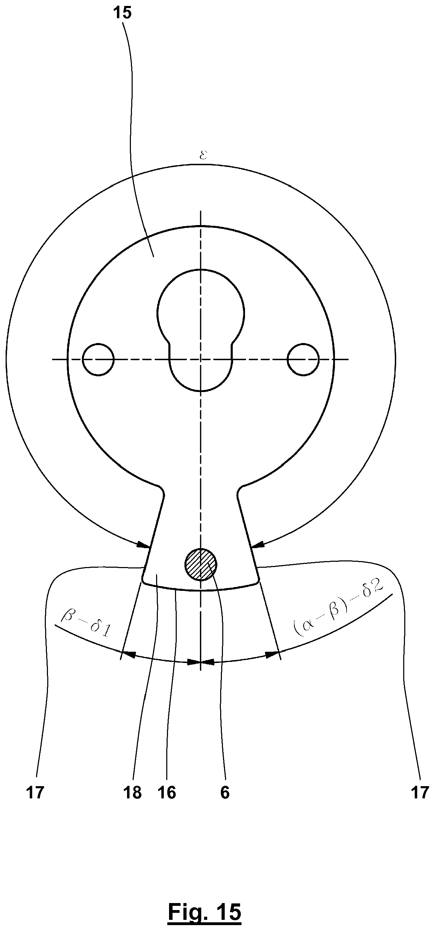

In **Fig. 15** ist schließlich eine Ausführungsform des Schwenkwinkeldefinitionselements 15 dargestellt, bei der dieses mit nur einem Sensor 6 zusammenwirkt. Dementsprechend existiert nur ein zusammenhängender Detektionsbereich 18, der in der Drehrichtung des Schwenkwinkeldefinitionselements 15 durch die beiden Detektionspunkte 17 begrenzt wird. Somit entspricht die Länge des zusammenhängenden Detektionsbereichs 18 der Größe der ersten Schwenkwinkeldifferenz 37.

### BEZUGSZEICHENLISTE

- 1: Weicheneinrichtung
- 2: Gehäuse
- 3: elektrische Leitung
- 4: Verbindungsstecker
- 5: Etikettenhalter
- 6: Sensor
- 7: Welle
- 8: Flansch
- 9: Weichenarm
- 10: Lager
- 11: Zahnrad
- 12: Zahnriemen
- 13: Ausgangswelle
- 14: Elektromotor
- 15: Schwenkwinkeldefinitionselement
- 16: Kreisbogenabschnitt
- 17: Detektionspunkt
- 18: Detektionsbereich
- 19: Gehäusedeckel
- 20: Dichtung
- 21: Gehäusegrundkörper
- 22: Gehäuseplatte
- 23: Befestigungsplatte
- 24: Regeleinrichtung
- 25: Fördervorrichtung
- 26: Profilschiene
- 27: Erster Förderbereich
- 28: Erstes Fördermittel
- 29: Erste Förderrichtung
- 30: Erste Förderkette
- 31: Zweiter Förderbereich
- 32: Zweites Fördermittel
- 33: Zweite Förderrichtung
- 34: Zweite Förderkette
- 35: Erste Schwenkstellung
- 36: Zweite Schwenkstellung
- 37: Erste Schwenkwinkeldifferenz
- 38: Dritte Schwenkstellung
- 39: Vierte Schwenkstellung
- 40: Zweite Schwenkwinkeldifferenz

## Patentansprüche

1. Elektrische Weicheneinrichtung (1) zum Festlegen und Ändern des Förderwegs von Objektträgern, die von einem Fördermittel (28) einer Fördervorrichtung (29) mitbewegt werden, mit
einem drehbar gelagerten Schwenkwinkeldefinitionselement (15), und
einem drehfest mit dem Schwenkwinkeldefinitionselement (15) verbundenen Welle (7), einem drehfest mit der Welle (7) verbundenen Weichenarm (9), der in den Förderweg hineinragt und diesen für die Objektträger definiert, wobei der Weichenarm das Bauteil der Weicheneinrichtung ist, das in den Förderweg hineinragt und diesen für die Objektträger definiert, einem oder mehreren Sensoren (6) zum Feststellen einer ersten Schwenkstellung (35) und einer zweiten Schwenkstellung (36) des Schwenkwinkeldefinitionselements (15), wobei sich die erste Schwenkstellung (35) und die zweite Schwenkstellung (36) durch eine erste Schwenkwinkeldifferenz (37) größer null voneinander unterscheiden, wobei das Schwenkwinkeldefinitionselement (15) einen der ersten Schwenkstellung (35) zugeordneten ersten Detektionspunkt (17) und einen der zweiten Schwenkstellung (36) zugeordneten zweiten Detektionspunkt (17) aufweist;
wobei die Detektionspunkte durch den oder die Sensoren (6) erfasst werden und dadurch das Erreichen der gewünschten Schwenkstellung festgestellt wird,
wobei die drehfest mit dem Schwenkwinkeldefinitionselement (15) verbundenen Welle (7) mit einer einem ersten Förderweg der Objektträger zugeordneten dritten Schwenkstellung (38) und einer einem zweiten Förderweg der Objektträger zugeordneten vierten Schwenkstellung (39) angeordnet ist, wobei sich die dritte Schwenkstellung (38) und die vierte Schwenkstellung (39) durch eine zweite Schwenkwinkeldifferenz (40) größer null voneinander unterscheiden,
wobei die zweite Schwenkwinkeldifferenz (40) größer als die erste Schwenkwinkeldifferenz (37) ist, **dadurch gekennzeichnet, dass** die Weicheneinrichtung (1) eine separate Regeleinrichtung (24) aufweist, und die Weicheneinrichtung dafür geeignet ist, die folgende Schritten des Verfahrens zum selbstanlernen der Weicheneinrichtung (1) durchzuführen:
- Verschwenken des Weichenarms (9) der Weicheneinrichtung (1) mittels eines elektrischen Antriebs (14) in Richtung einer gewünschten Weichenendstellung,
- Detektieren des Erreichens einer definierten Schwenkstellung (35, 36) des Schwenkwinkeldefinitionselements (15) der Weicheneinrichtung (1) mittels eines der ein oder mehrere Sensoren (6) unter Abgabe eines Signals an die Regeleinrichtung (24),
- fortgesetztes Verschwenken des Weichenarms (9) in Richtung der gewünschten Weichenendstellung für eine definierte Zeit oder einen definierten Weg,
- Verschwenken des Weichenarms (9) in die entgegengesetzte Richtung, bis die Schwenkstellung (35, 36) des Schwenkwinkeldefinitionselements (15) wieder erreicht wurde, wobei währenddessen der dabei zurückgelegte Weg ermittelt und als Kalibrierungsweg abgespeichert wird,
wobei der ermittelte Weg in einem Speicher der Regeleinrichtung (24) als Kalibrierungsweg abgespeichert ist.

2. Elektrische Weicheneinrichtung (1) nach Anspruch 1, **dadurch gekennzeichnet, dass** die erste Schwenkstellung (35) des Schwenkwinkeldefinitionselements (15) der dritten Schwenkstellung (38) der Welle (7) und die zweite Schwenkstellung (36) des Schwenkwinkeldefinitionselements (15) der vierten Schwenkstellung (39) der Welle (7) zugeordnet ist.

3. Elektrische Weicheneinrichtung (1) nach mindestens einem der vorhergehenden Ansprüche, **dadurch gekennzeichnet, dass** die erste Schwenkwinkeldifferenz (37) durch die Außengeometrie des Schwenkwinkeldefinitionselements (15) bestimmt ist.

4. Elektrische Weicheneinrichtung (1) nach mindestens einem der vorhergehenden Ansprüche, **dadurch gekennzeichnet, dass** der erste Detektionspunkt (17) und der zweite Detektionspunkt (17) des Schwenkwinkeldefinitionselements (15) Endpunkte eines gemeinsamen Kreisbogenabschnitts (16) sind.

5. Elektrische Weicheneinrichtung (1) nach Anspruch 4, **dadurch gekennzeichnet, dass** die Länge des Kreisbogenabschnitts (16) die Größe der ersten Schwenkwinkeldifferenz (37) bestimmt.

6. Elektrische Weicheneinrichtung (1) nach mindestens einem der vorhergehenden Ansprüche, **gekennzeichnet durch** genau einen Sensor (6), der beide Detektionspunkte (17) detektiert.

7. Elektrische Weicheneinrichtung (1) nach mindestens einem der Ansprüche 1 bis 5, **gekennzeichnet durch** genau zwei Sensoren (6), wobei der erste Sensor (6) den ersten Detektionspunkt (17) und der zweite Sensor (6) den zweiten Detektionspunkt (17) detektiert.

8. Elektrische Weicheneinrichtung (1) nach mindestens einem der vorhergehenden Ansprüche, **dadurch gekennzeichnet, dass** der oder die Sensoren (6) als Lichtschranken, photoelektrische Sensoren oder induktive Sensoren ausgebildet sind.

9. Elektrische Weicheneinrichtung (1) nach mindestens einem der vorhergehenden Ansprüche, **dadurch gekennzeichnet, dass** der oder die Sensoren (6) als Sensoren (6) mit einem Öffnerkontakt ausgebildet sind.

10. Elektrische Weicheneinrichtung (1) nach mindestens einem der vorhergehenden Ansprüche, **dadurch gekennzeichnet, dass** für die Einrichtung der Weicheneinrichtung (1) für eine andere erste Schwenkwinkeldifferenz (37) das Schwenkwinkeldefinitionselement (15) gegen ein anderes Schwenkwinkeldefinitionselement (15) mit einer anderen Außengeometrie austauschbar ist.

11. Elektrische Weicheneinrichtung (1) nach mindestens einem der vorhergehenden Ansprüche, **weiterhin gekennzeichnet durch** ein Gehäuse (2), wobei der oder die Sensoren (6) in dem Gehäuse (2) angeordnet sind.

12. Elektrische Weicheneinrichtung (1) nach mindestens einem der vorhergehenden Ansprüche, **dadurch gekennzeichnet, dass** der elektrische Antrieb ein elektrischer Schrittmotor (14) zum Erzeugen der Schwenkbewegung der Welle (7) und des Schwenkwinkeldefinitionselements (15) ist, wobei der Schrittmotor (14) in Abhängigkeit von den Sensorsignalen des oder der Sensoren (6) ausgeschaltet wird.

13. Verfahren zum Anlernen einer elektrischen Weicheneinrichtung (1), insbesondere nach mindestens einem der vorhergehenden Ansprüche, mit der folgenden Schritte:
Verschwenken eines Weichenarms (9) der Weicheneinrichtung (1) mittels eines elektrischen Antriebs (14) in Richtung einer gewünschten Weichenendstellung,
Detektieren des Erreichens einer definierten Schwenkstellung (35, 36) eines Schwenkwinkeldefinitionselements (15) der Weicheneinrichtung (1) mittels eines Sensors (6) unter Abgabe eines Signals an eine Regeleinrichtung (24),
fortgesetztes Verschwenken des Weichenarms (9) in Richtung der gewünschten Weichenendstellung für eine definierte Zeit oder einen definierten Weg,
Verschwenken des Weichenarms (9) in die entgegengesetzte Richtung, bis die Schwenkstellung (35, 36) des Schwenkwinkeldefinitionselements (15) wieder erreicht wurde, wobei währenddessen der dabei zurückgelegte Weg ermittelt und als Kalibrierungsweg abgespeichert wird.

## Claims

1. An electric set of points (1) for determining and changing the conveying path of object carriers, which are entrained in movement by a conveying means (28) of a conveying device (29), having
a rotatably mounted pivot angle definition element (15), and
a shaft (7) connected in a rotationally fixed manner to the pivot angle definition element (15), a points arm (9) connected to the shaft (7) in a rotationally fixed manner, which points arm protrudes into the conveying path and defines the same for the object carriers, the points arm being the component of the set of points, which protrudes into the conveying device and defines the same for the object carriers,
one or more sensors (6) for determining a first pivot position (35) and a second pivot position (36) of the pivot angle definition element (15), the first pivot position (35) and the second pivot position (36) differing from one another by a first pivot angle difference (37) of greater than zero, the pivot angle definition element (15) having a first detection point (17) assigned to the first pivot position (35) and a second detection point (17) assigned to the second pivot position (36);
the detection points being detected by the sensor(s) (6) and the reaching of the desired pivot position being determined as a result,
the shaft (7) connected in a rotationally fixed manner to the pivot angle definition element (15) being arranged with a third pivot position (38) assigned to a first conveying path of the object carriers and a fourth pivot position (39) assigned to a second conveying path of the object carriers, the third pivot position (38) and the fourth pivot position (39) differing from one another by a second pivot angle difference (40) of greater than zero,
the second pivot angle difference (40) being greater than the first pivot angle difference (37),
**characterized in that** the set of points (1) has a separate control device (24), and the set of points is suitable for carrying out the following steps of the method for the self training of the set of points (1):
- pivoting the points arm (9) of the set of points (1) by means of an electric drive (14) in the direction of a desired points end position,
- detecting the reaching of a defined pivot position (35, 36) of the pivot angle definition element (15) of the set of points (1) by means of one of the one or more sensors (6) with the delivery of a signal to the control device (24),
- continued pivoting of the points arm (9) in the direction of the desired points end position for a defined time or a defined path,
- pivoting the points arm (9) in the opposite direction until the pivot position (35, 36) of the pivot angle definition element (15) has been reached again, wherein the path travelled in the meantime is determined and saved as calibration path,
wherein the determined path is saved in a memory of the control device (24) as calibration path.

2. The electric set of points (1) according to Claim 1, **characterized in that** the first pivot position (35) of the pivot angle definition element (15) is assigned to the third pivot position (38) of the shaft (7) and the second pivot position (36) of the pivot angle definition element (15) is assigned to the fourth pivot position (39) of the shaft (7).

3. The electric set of points (1) according to at least one of the preceding claims, **characterized in that** the first pivot angle difference (37) is determined by the external geometry of the pivot angle definition element (15).

4. The electric set of points (1) according to at least one of the preceding claims, **characterized in that** the first detection point (17) and the second detection point (17) of the pivot angle definition element (15) are end points of a common circular arc section (16).

5. The electric set of points (1) according to Claim 4, **characterized in that** the length of the circular arc section (16) determines the size of the first pivot angle difference (37).

6. The electric set of points (1) according to at least one of the preceding claims **characterized by** precisely one sensor (6), which detects both detection points (17).

7. The electric set of points (1) according to at least one of Claims 1 to 5, **characterized by** precisely two sensors (6), wherein the first sensor (6) detects the first detection point (17) and the second sensor (6) detects the second detection point (17).

8. The electric set of points (1) according to at least one of the preceding claims, **characterized in that** the sensor(s) (6) are constructed as light barriers, photoelectric sensors or inductive sensors.

9. The electric set of points (1) according to at least one of the preceding claims, **characterized in that** the sensor(s) (6) are constructed as sensors (6) with a break contact.

10. The electric set of points (1) according to at least one of the preceding claims, **characterized in that** for setting up the set of points (1) for a different first pivot angle difference (37), the pivot angle definition element (15) can be exchanged for a different pivot angle definition element (15) with a different external geometry.

11. The electric set of points (1) according to at least one of the preceding claims, further **characterized by** a housing (2), wherein the sensor(s) (6) are arranged in the housing (2).

12. The electric set of points (1) according to at least one of the preceding claims, **characterized in that** the electric drive is an electric stepper motor (14) for creating the pivot movement of the shaft (7) and the pivot angle definition element (15), wherein the stepper motor (14) is switched off as a function of the sensor signals of the sensor(s) (6).

13. A method for training an electric set of points (1), in particular according to at least one of the preceding claims, having the following steps:
pivoting a points arm (9) of the set of points (1) by means of an electric drive (14) in the direction of a desired points end position,
detecting the reaching of a defined pivot position (35, 36) of a pivot angle definition element (15) of the set of points (1) by means of a sensor (6) with the delivery of a signal to a control device (24),
continued pivoting of the points arm (9) in the direction of the desired points end position for a defined time or a defined path,
pivoting the points arm (9) in the opposite direction until the pivot position (35, 36) of the pivot angle definition element (15) has been reached again, wherein the path travelled in the meantime is determined and saved as calibration path.

## Revendications

1. Système d'aiguillage électrique (1), destiné à fixer et à modifier le trajet de transport de supports d'objets, qui sont co-déplacés par un moyen de convoyage (28) d'un dispositif de convoyage (29), comportant
un élément de définition de l'angle de pivotement (15) logé en rotation et
un arbre (7), relié de manière solidaire en rotation avec l'élément de définition de l'angle de pivotement (15), un bras aiguilleur (9), relié de manière solidaire en rotation avec l'arbre (7), qui saillit dans le trajet de transport et définit ce dernier pour les supports d'objets, le bras aiguilleur étant l'élément constitutif du système d'aiguillage qui saillit dans le trajet de transport et définit ce dernier pour les supports d'objets,
un ou plusieurs capteurs (6), destinés à fixer une première position en pivotement (35) et une deuxième position en pivotement (36) de l'élément de définition de l'angle de pivotement (15), la première position en pivotement (35) et la deuxième position en pivotement (36) se différenciant l'une de l'autre par une première différence d'angle de pivotement (37) supérieure à zéro, l'élément de définition de l'angle de pivotement (15) comportant un premier point de détection (17) associé à la première position en pivotement (35) et un deuxième point de détection (17) associé à la deuxième position en pivotement (36) ;
les points de détection étant détectés par le ou les capteurs (6) et de ce fait, l'atteinte de la position en pivotement souhaitée étant constatée,
l'arbre (7) relié de manière solidaire en rotation avec l'élément de définition de l'angle de pivotement (15) étant placé avec une troisième position en pivotement (38) associée à un premier trajet de transport des supports d'objets et une quatrième position en pivotement (39) associée à un deuxième trajet de transport des supports d'objets, la troisième position en pivotement (38) et la quatrième position en pivotement (39) se différenciant l'une de l'autre par une deuxième différence d'angle de pivotement (40) supérieure à zéro,
la deuxième différence d'angle de pivotement (40) étant supérieure à la première différence d'angle de pivotement (37),
**caractérisé en ce que** le système d'aiguillage (1) comporte un système de réglage (24) séparé et **en ce que** le système d'aiguillage est apte à réaliser les étapes suivantes du procédé destiné à l'auto-apprentissage du système d'aiguillage, consistant à :
- faire pivoter le bras aiguilleur (9) du système d'aiguillage (1) au moyen d'un entraînement électrique (14) dans la direction d'une position finale souhaitée de l'aiguillage,
- détecter l'atteinte d'une position en pivotement (35, 36) définie de l'élément de définition de l'angle de pivotement (15) du système d'aiguillage (1) au moyen de l'un ou des plusieurs capteurs (6), en délivrant un signal au système de réglage (24),
- continuer à faire pivoter le bras aiguilleur (9) dans la direction de la position finale souhaitée de l'aiguillage pendant un temps défini ou sur une course définie,
- faire pivoter le bras aiguilleur (9) dans la direction opposée, jusqu'à ce que la position en pivotement (35, 36) de l'élément de définition de l'angle de pivotement (15) ait de nouveau été atteinte, alors que pendant ce temps, la course parcourue à cet effet est déterminée et mémorisée en tant que course d'étalonnage,
la course déterminée étant mémorisée en tant que course d'étalonnage dans une mémoire du système de réglage (24).

2. Système d'aiguillage électrique (1) selon la revendication 1, **caractérisé en ce que** la première position en pivotement (35) de l'élément de définition de l'angle de pivotement (15) est associée à la troisième position en pivotement (38) de l'arbre (7) et la deuxième position en pivotement (36) de l'élément de définition de l'angle de pivotement (15) est associée à la quatrième position en pivotement (39) de l'arbre (7).

3. Système d'aiguillage électrique (1) selon au moins l'une quelconque des revendications précédentes, **caractérisé en ce que** la première différence d'angle de pivotement (37) est déterminée par la géométrie extérieure de l'élément de définition de l'angle de pivotement (15).

4. Système d'aiguillage électrique (1) selon au moins l'une quelconque des revendications précédentes, **caractérisé en ce que** le premier point de détection (17) et le deuxième point de détection (17) de l'élément de définition de l'angle de pivotement (15) sont des points extrêmes d'un segment d'arc de cercle (16) commun.

5. Système d'aiguillage électrique (1) selon la revendication 4, **caractérisé en ce que** la longueur du segment d'arc de cercle (16) définit la grandeur de la première différence d'angle de pivotement (37).

6. Système d'aiguillage électrique (1) selon au moins l'une quelconque des revendications précédentes, **caractérisé par** précisément un capteur (6), qui détecte les deux points de détection (17).

7. Système d'aiguillage électrique (1) selon au moins l'une quelconque des revendications 1 à 5, **caractérisé par** précisément deux capteurs (6), le premier capteur (6) détectant le premier point de détection (17) et le deuxième capteur (6) détectant le deuxième point de détection (17).

8. Système d'aiguillage électrique (1) selon au moins l'une quelconque des revendications précédentes, **caractérisé en ce que** le ou les capteurs (6) sont conçus sous la forme d'une barrière photo-électrique, de capteurs photo-électriques ou de capteurs inductifs.

9. Système d'aiguillage électrique (1) selon au moins l'une quelconque des revendications précédentes, **caractérisé en ce que** le ou les capteurs (6) sont conçus sous la forme de capteurs (6) pourvus d'un contact d'ouverture.

10. Système d'aiguillage électrique (1) selon au moins l'une quelconque des revendications précédentes, **caractérisé en ce que** pour l'installation du système d'aiguillage (1) pour une autre première différence d'angle de pivotement (37), l'élément de définition de l'angle de pivotement (15) est interchangeable contre un autre élément de définition de l'angle de pivotement (15) présentant une autre géométrie extérieure.

11. Système d'aiguillage électrique (1) selon au moins l'une quelconque des revendications précédentes, **caractérisé en outre par** un boîtier (2), le ou les capteurs (6) étant placés dans le boîtier (2).

12. Système d'aiguillage électrique (1) selon au moins l'une quelconque des revendications précédentes, **caractérisé en ce que** l'entraînement électrique est un moteur électrique pas à pas (14), destiné à générer le déplacement pivotant de l'arbre (7) et de l'élément de définition de l'angle de pivotement (15), le moteur pas à pas (14) étant mis hors service en fonction des signaux de capteur du ou des capteurs (6).

13. Procédé, destiné à l'apprentissage d"un système d'aiguillage électrique (1), notamment selon au moins l'une quelconque des revendications précédentes, comportant les étapes suivantes, consistant à :
faire pivoter un bras aiguilleur (9) du système d'aiguillage (1) au moyen d'un entraînement électrique (14) dans la direction d'une position finale souhaitée de l'aiguillage,
détecter l'atteinte d'une position en pivotement (35, 36) définie de l'élément de définition de l'angle de pivotement (15) du système d'aiguillage (1) au moyen d'un capteur (6), en délivrant un signal au système de réglage (24),
continuer à faire pivoter le bras aiguilleur (9) dans la direction de la position finale souhaitée de l'aiguillage pendant un temps défini ou sur une course définie,
faire pivoter le bras aiguilleur (9) dans la direction opposée, jusqu'à ce que la position en pivotement (35, 36) de l'élément de définition de l'angle de pivotement (15) ait de nouveau été atteinte, alors que pendant ce temps, la course parcourue à cet effet est déterminée et mémorisée en tant que course d'étalonnage.
